# EUROPEAN PATENT SPECIFICATION

(11) **EP 2 747 414 B1**
(45) Date of publication and mention of the grant of the patent: **08.04.2015**
(21) Application number: 12197677.3
(22) Date of filing: 18.12.2012
(51) Int. Cl.: H04N 5/232, H04N 5/235

(54) **Monitoring method and camera**
Überwachungsverfahren und Kamera
Procédé et caméra de surveillance

(43) Date of publication of application: 25.06.2014
(73) Proprietor: Axis AB, 223 69 Lund (SE)
(72) Inventor: Nyström, Johan, 235 43 Vellinge (SE)
(74) Representative: Johansson, Magnus

(56) References cited:
- US-A1- 2006 250 505
- US-A1- 2011 228 119

## Description

### Technical field

The present invention relates to a monitoring camera and a method for controlling camera settings.

### Background

Monitoring cameras are used in many different applications, both indoors and outdoors, to monitor a variety of environments. In order to receive useful images of good quality from such a camera, it is important to use appropriate settings that are correctly adapted to the present conditions of the monitored scene and which allow an operator of the camera to see any events of interest within the monitored scene. Some cameras are able to monitor different parts of a scene by changing or moving a field of view e.g. by panning, tilting or zooming the camera. For such cameras it may be even more challenging to find the correct settings since e.g. the lighting conditions of the monitored environment may change as the camera moves.

### Summary of the invention

In view of the above, it is thus an object of the present invention to overcome or at least mitigate the above-mentioned challenges and to provide an improved way of controlling camera settings.

According to a first aspect of the invention a method of controlling camera settings for a monitoring camera arranged to monitor a scene, the monitoring camera being arranged to capture images of different parts of the scene by altering a field of view of the camera, comprises the steps of
accessing data defining a camera settings control area within the scene,
determining if there is an overlapping region between a current field of view of the camera and the camera settings control area, and
if there is an overlapping region, controlling camera settings based on image data captured by the monitoring camera in the overlapping region.

In this way it is possible to ensure that the most important parts of a scene are depicted with good image quality. This improves the usefulness of the captured video and makes it more likely that interesting details will be noticed correctly.

The camera settings may include at least one of: focus settings, exposure settings, white balance settings, IR cut filter settings, iris control settings and settings for an illumination unit.

Other settings may also be possible to control. When controlling focus settings based on the overlapping region, it is ensured that the image captured in that region will be sharp. When controlling exposure settings it is ensured that the brightness of the image captured in the overlapping region is correct. The brightness of the image may also be influenced by an IR cut filter mode, e.g. if it is on or off, and the iris control, e.g. in the form of f-number. Additionally or as an alternative, the brightness may also be improved by increasing or decreasing illumination from an illumination unit. Controlling white balance and gain settings based on the overlapping region will also improve the image quality of that region.

The step of controlling camera settings may comprise automatically controlling camera settings based on image data captured by the monitoring camera in the overlapping region. This would e.g. mean that an autofocus algorithm is instructed to only use image data from the overlapping region to control the autofocus setting. In other words, image data from the overlapping region is used as input to automatic procedures for determining camera settings which are used for the whole image within the current field of view.

The step of controlling camera settings may additionally or alternatively comprise accessing data relating to predefined camera settings values related to the camera settings control area, and controlling camera settings according to the predefined camera settings values. This may be useful when a user would like to specifically set e.g. a focus distance to a certain value once a camera settings control area is within the current field of view. It could e.g. be used when there are trees standing in front of an entrance, and the focus distance may then be set to the distance to the entrance, making sure that an autofocus algorithm does not use the trunks of the trees to set the focus distance. Once again, camera settings which influence the entire image may in this way be set in a way that makes sure that the overlapping region is depicted with good image quality.

The step of accessing data may comprise accessing data defining a selection of camera settings to be controlled, and the step of controlling camera settings may comprise controlling the defined selection of camera settings.

In this way the settings which have the most impact on image quality for a certain scene may be selected, and other which are less important in some circumstances may be set in a conventional manner. This gives further possibilities to adapt to a specific use case.

The step of accessing data defining a camera settings control area may comprise accessing data defining the camera settings control area in a coordinate system for the scene, and the step of determining if there is an overlapping region may comprises comparing coordinates of the camera settings control area to coordinates of the current field of view in the coordinate system for the scene.

This is a convenient and reasonably computationally intensive way of performing the comparison. Another option would be to translate the coordinates of the camera settings control areas to a relative coordinate system of each current field of view.

The step of defining a camera settings control area may comprise defining a first and a second camera settings control area, and the step of determining an overlapping region may comprise determining if there is a first and a second overlapping region corresponding to the first and the second camera settings control area, respectively, and, if there is a first and second overlapping region, the step of controlling camera settings may comprise selecting one of the first and the second overlapping region based on region properties for the first and the second overlapping region, and controlling camera settings based on the selected overlapping region, wherein the region properties include at least one of: size of region, amount of detected motion in region, a priority setting for the camera settings control area corresponding to the respective region.

In this way it is possible to adapt the captured image to correctly depict to more than one important area in the monitored scene, such as when two entrances to a building are present within the scene. The selection of region based on different region properties provides a convenient and easily implemented way of selecting a region to prioritize for the camera settings control.

According to another aspect of the invention a monitoring camera arranged to monitor a scene is provided which comprises
a field of view altering unit arranged to alter a field of view of the camera such that the camera is able to capture images of different parts of a scene,
a data input arranged to receive data defining a camera settings control area within the scene,
an overlap determining unit arranged to determine if there is an overlapping region between a current field of view of the camera and the camera settings control area, and
a camera settings control unit arranged to control camera settings based on the overlapping region.

The field of view altering unit may comprise a motor arranged to alter the field of view of the camera in at least one of a pan, tilt or zoom direction.

The pan, tilt or zoom may be controlled in any suitable manner, e.g. by receiving input from a user via a joystick or by receiving input relating to a field of view altering scheme, such as a guard tour.

The data input may be arranged to receive data defining a selection of camera settings to be controlled, and the camera settings control unit may be arranged to control the defined selection of camera settings.

The data defining a camera settings control area and/or the data defining a selection of camera settings to be controlled may be based on user input. The user input may e.g. be via a graphical user input where the user draws shapes around any area in the current view of the scene which are to be used as a camera settings control area. The user may also be allowed to move the current field of view of the camera during set-up of the camera settings control areas to be able to define another camera settings control area for another part of the scene. The selection of camera settings to be controlled based on one or more of the camera settings control areas may e.g. be selected by ticking a box in a user interface or by selecting from a drop-down list. It would possible to select some manual settings, e.g. a certain focus distance, and some automatic settings, e.g. exposure, which should be applied when a certain camera settings control area is overlapped by the current field of view. In this way it is made sure that the focus is always correctly adapted to a certain area or fix object within the scene - such as an entrance - while the exposure may be set based on the current level of light within that area.

The data input may be arranged to receive data defining the camera settings control area in a coordinate system for the scene, and the overlap determining unit may be arranged to compare coordinates of the camera settings control area to coordinates of the current field of view.

The data input may be arranged to receive data defining a first and a second camera settings control area, and the overlap determining unit may be arranged to determine if there is a first and a second overlapping region corresponding to the first and the second camera settings control area, respectively, and, if there is a first and second overlapping region, the camera settings control unit may be arranged to select one of the first and the second overlapping region based on region properties for the first and the second overlapping region, and to control camera settings based on the selected overlapping region, wherein the region properties include at least one of: size of region, amount of detected motion in region, a priority setting for the camera settings control area corresponding to the respective region.

According to another aspect of the invention a computer-readable recording medium is provided having recorded thereon a program for implementing the herein described method when executed on a device having processing capabilities.

These two latter aspects of the invention provide corresponding advantages to the first aspect of the invention.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, a reference to "a sensor" or "the sensor" may include several devices, and the like. Furthermore, the word "comprising" does not exclude other elements or steps.

### Brief Description of the Drawings

The invention will now be described in more detail by way of example and with reference to the accompanying schematic drawings, in which:
Fig. 1 shows a monitored scene
Fig. 2 shows a monitoring camera
Fig. 3 illustrates a method according to the invention.

### Detailed description of embodiments

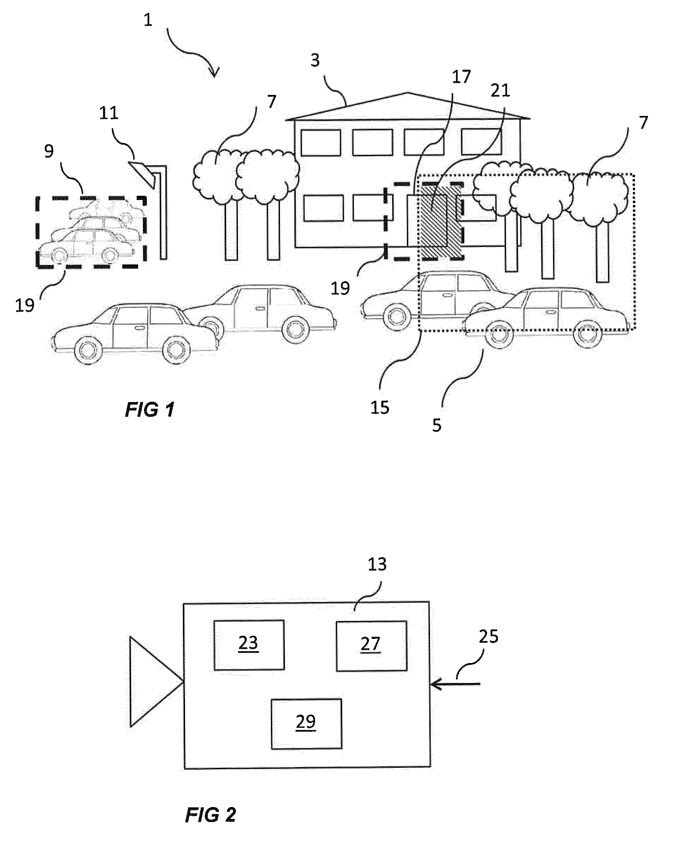

Fig. 1 illustrates a scene 1 with an office building 3, a number of cars 5 driving by, trees 7 standing next to the building 3 and a car park 9 where some cars are parked and which is lit by a lamp post 11. The scene is monitored by a monitoring camera 13, details of which are shown in Fig. 2. The camera 13 is able to move or shift, or in other words alter, change or adjust, its field of view by panning or tilting, or by zooming using some type of zoom mechanism such as an adjustable zoom lens. A current field of view of the camera 13 is illustrated by the rectangle 15.

By altering its field of view 15, the camera 13 covers varying parts of the scene 1.The camera 13 may change how much of the scene 1 that is covered; i.e. when zooming in using a telephoto setting, a smaller part of the scene 1 will be covered, and when zooming out to a wide-angle setting, a larger part of the scene 1 will be covered. The camera may be a so called PTZ camera, but it may also be capable of altering its field of view in only one of the pan, tilt or zoom "dimensions", or in any two of those. It may be noted that the camera 13 is usually mounted in a set position and has a movable field of view and it is therefore able to determine a position of its current field of view within a coordinate system for the scene 1. Such a coordinate system may sometimes be denoted a common coordinate system or an absolute coordinate system.

As the camera alters its field of view to cover different parts of the scene, the camera settings used when capturing images, such as autofocus, automatic exposure, automatic white balance settings, automatic IR cut filter settings, automatic iris control settings and possibly also settings for a camera controlled illumination unit, are dynamically adapted based on the captured image in order to achieve a good image quality. Different algorithms may be used for this. If motion is detected in part of the current field of view, the camera settings may be adjusted to give a good image quality in that part of the field of view. Another common algorithm is based on detecting contrast in the image and then choosing the focus distance which gives the largest contrast for the overall field of view.

However, as the inventor has realized, in some instances, when using an automatic method for adapting the camera settings, the current field of view may cover a part of the scene where some portion of the field of view is given an inappropriate attention in the settings. This may e.g. happen if motion is detected in an "uninteresting" part of the scene covered by the current field of view and may cause more important parts covered to e.g. become blurry and less useful for surveillance purposes.

Such a situation may occur when the current field of view 15 is positioned as shown in Fig. 1. In this case moving cars are present in the lower part of the field of view, but the most important part to watch is actually around the entrance 17 to the office building 3. If the camera were to use the fact that motion is detected in lower part of the currently captured image, which also is closer to the camera than the office building 3, and set e.g. focus and exposure based on that part, the area around the entrance 17 may be captured with less sharpness and additionally be too dark or to bright.

If the camera were to use a contrast-aided method for setting autofocus, it may be the case that the tree trunks of the trees 7 standing next to the building 3 are given too much attention. As the trees 7 in this case are closer to the camera than the building, the office building 3 may in this case too become slightly out of focus, meaning that the real area of interest - the entrance 17 - will not be as sharp as desired.

To improve this situation, a number of camera settings control areas 19 have been defined within the scene 1. These areas may be set-up at installation of the camera or later on based on the needs of a user to cover places of specific interest in the scene, such as in this case the entrance 17 to the office building 3. The camera settings control areas 19 are defined in a manner which allows the camera to determine the relation and a possible overlap between its current field of view and the camera settings control areas. To this purpose, the camera settings control areas may be defined in the coordinate system for the scene. In other words, the camera settings control areas are defined in what could be denoted a PTZ-aware manner.

When at least part of a camera settings control area 19 is covered by the current field of view of the camera, the camera will control its camera settings based on this part, illustrated by the shadowed region 21 in Fig. 1. This means that when a place of specific interest is at least partly covered by a current field of view of the camera, the camera uses camera settings which will give image data having a good quality in the image parts which depict that place. The control of the camera settings could be done by using image data captured by the monitoring camera in the overlapping region as input to one or more automatic algorithms for determining camera settings. Another option is to use predefined values for one or more camera settings as soon as a camera settings control area being associated with one or more such predefined camera settings values is overlapped by the current field of view.

It may be noted that it would also be possible to set a minimum size of the overlapping region for it to be used to control camera settings. In other words, if only a very small overlap exists, it would be possible to control the camera settings in the normal way, e.g. based on the entire captured image.

In the scene illustrated in Fig. 1, two camera settings control areas 19 have been defined, a first one for the entrance to the office building 3 and another one for the car park 9. It may be noted that the camera settings control area 19 which covers part of the car park 9 has been set up to not cover the lamp on the lamp post 11, thereby making sure that an automatic exposure setting is not adjusted based on image data around the possibly very bright lamp at the lamp post 11.

As the camera field of view 15 moves across the scene, the camera will check, by comparing the position or coordinates of the current field of view with the position or coordinates of any camera settings control areas, if any such areas are encountered. The coordinates of the field of view and the camera settings control areas may be defined in the coordinate system for the scene to start with, or they may be translated into a common coordinate system for the purpose of the comparison. As soon as the current field of view is determined to overlap or cover a camera settings control area, the camera settings will be controlled based on the part of the image which corresponds to overlapping region 21 of the camera settings control area 17 and the current field of view 15.

In case two or more camera settings control areas are overlapped, partly or entirely, by the current field of view, a number of different options exist to solve the situation. As one alternative, the larger of the overlapping regions may be used to control the camera settings. Another option is to detect if motion is present within any of the overlapping regions, and select the region were motion is detected. If motion is detected in more than one overlapping region, it would be possible to either quantify the amount of motion detected and choose the region with the most motion detected, or to simply go back to selecting the larger overlapping region.

Yet another option is to allow priorities to be set for the different camera settings control areas and select the overlapping region which is associated with the camera settings control area with the highest priority. It could also be possible in some instances to combine the image data captured in both the covered camera settings control areas to control some camera settings.

Going more into detail of the set-up of the camera settings control areas, these may be defined by a user, e.g. by input to a graphical user interface or by selecting coordinates. It would also be possible to perform some type of intelligent image analysis assisted set-up, e.g. where image elements indicating doors are detected and suggested to the user as possible areas of interest.

In addition to defining the camera settings control areas, it may also be possible to define which camera settings should be controlled by the image data captured in any overlapping region of a camera settings control area. As noted above, the camera settings to be controlled may be at least one of focus settings, exposure settings, white balance settings, IR cut filter settings, iris control setting and settings for an illumination unit, and which of these to be controlled may be chosen beforehand. It may also be possible to select some of the camera settings to be controlled automatically based on image data captured in the overlapping region and some to be set to a respective predefined value which typically is determined to be appropriate for that camera setting and the area or fix object in the scene which is covered by that camera settings control area.

In case settings for an illumination unit is included in the camera settings to control, it may be noted that such an illumination unit may either be integrated in the camera or provided as a separate unit, mounted next to or at a distance from the camera. Such an illumination unit may e.g. comprise a number of LEDs and may e.g. provide visible or infra-red illumination.

It would also be possible to allow each camera settings control area to be associated with one or more camera settings to be controlled, so that one camera settings control area would be used only for focus purposes and another only for exposure settings. The camera settings to control may be selected by a user, one convenient option would be to use a graphical user interface and let the user check different boxes in a list of available camera settings to control, either applying to all defined camera settings control areas, or different choices for the different camera settings control areas.

Fig. 2 illustrates in more detail the monitoring camera 13 arranged to monitor the scene 1. The camera 13 may e.g. be a digital network camera adapted for video surveillance of the scene 1. The camera 13 captures images of the part of the scene 1 covered by the current field of view 15 of the camera 13.

The camera 13 comprises a field of view altering unit 23 arranged to alter the field of view 15 of the camera 13. The field of view altering unit 23 may e.g. comprise one or more devices such as motors which can change one or more of the pan, tilt or zoom settings of the camera, by moving the viewing direction of the camera or changing the setting of a zoom lens. The camera may also be capable of digitally panning, tilting or zooming to alter the field of view 15. A data input 25 is arranged to receive data defining a camera settings control area 19 within the scene 1. This data may e.g. be in the form of coordinates in a coordinate system for the scene 1.

An overlap determining unit 27 is provided to determine if there is an overlapping region 21 between a current field of view 15 of the camera 13 and a camera settings control area 17, e.g. by comparing the position of the current field of view and the position of the camera settings control area 17. The positions may be expressed in coordinates in a coordinate system for the scene 1.

The camera 13 further comprises a camera settings control unit 29 arranged to control camera settings based on the overlapping region 21. The camera settings may be set solely based on this overlapping region, ignoring the remaining image. It could also be possible that other parts of the image is used to some extent, e.g. by using appropriate weighting.

This may e.g. mean that the autofocus algorithm is instructed to only use the image data from the overlapping region 21 when determining an appropriate focus distance, and, at least to some extent, ignore other parts of the captured image which as a result may become blurry. It may also mean that the automatic exposure is set so that the overlapping region 21 is properly exposed, i.e. not too dark and not too bright, even if this would cause other parts of the captured image to become too dark or too bright. The automatic exposure settings may include gain and exposure time. The brightness may also be influenced by letting the automatic iris control set an f-number for an iris for the camera lens based on image data from the overlapping region. In case the camera is equipped with a filter for infra-red light, i.e. an IR cut filter, the position or state (usually on or off) of such a filter may also be set based on the image data in the overlapping region. The white balance may also be controlled based on the overlapping region, more or less ignoring any negative effects that could have on the image quality, typically the colors, of the remaining image captured in the current field of view.

Another camera setting which could be controlled is a setting for an illumination unit. This unit may then be controlled to make sure that the overlapping region is properly lit. Depending on the properties of the illumination unit it may e.g. be possible to control the direction of the illumination or the strength of the illumination, e.g. by switching on or off part of the illumination or by controlling the strength of illumination from a dimmable light source. The direction of the illumination could also be controlled by mechanically turning the unit to steer the illumination in the desired direction. It may also be possible to control the type of illumination, e.g. IR illumination or visible light.

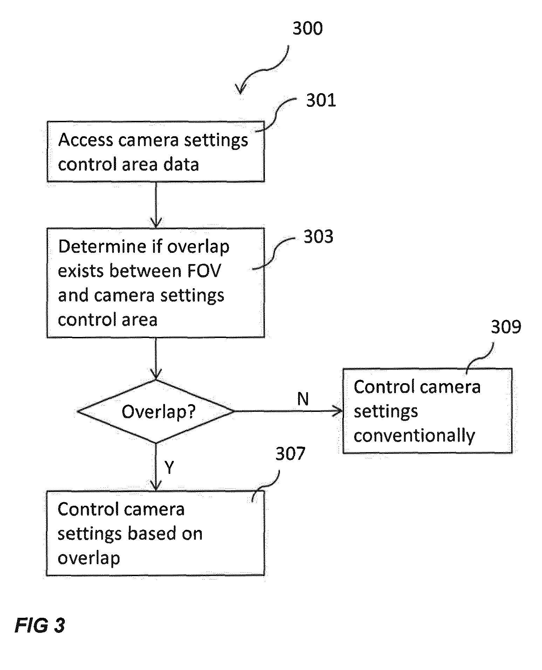

Fig. 3 illustrates a method 300 for monitoring a scene by a monitoring camera. In step 301 the camera accesses data defining a camera setting control area within the scene, which area may have been previously defined e.g. by a user. In step 303 the camera determines if an overlapping region exists between the current field of view, FOV, and the camera settings control area. This may e.g. be done by comparing coordinates for the current field of view with coordinates for the camera settings control area, where the coordinates are expressed in a coordinate system for the scene. The determining may also be performed by an external processing unit connected to the camera.

If it is determined that an overlapping region exists, camera settings for the monitoring camera are controlled in step 307 based on the overlapping region. If it is determined that no overlap exists, camera settings may instead be controlled in a conventional manner. It would also be possible to determine if the current field of view overlaps more than one camera settings control areas. This could either be done in sequence to the first determination or in parallel. Data regarding the further camera settings control areas would then be accessed by the camera prior to the respective determination.

It will be appreciated that a person skilled in the art can modify the above-described embodiments in many ways and still use the advantages of the invention as shown in the embodiments above.

Thus, the invention should not be limited to the shown embodiments but should only be defined by the appended claims.

## Claims

1. A method of controlling camera settings for a monitoring camera arranged to monitor a scene, the monitoring camera being arranged to capture images of different parts of the scene by altering a field of view of the camera, comprising the steps of
accessing data defining a camera settings control area within the scene,
determining if there is an overlapping region between a current field of view of the camera and the camera settings control area, and
if there is an overlapping region, controlling camera settings based on the overlapping region.

2. The method of claim 1, wherein the camera settings include at least one of: focus settings, exposure settings, white balance settings, IR cut filter mode, iris control settings and settings for an illumination unit.

3. The method of claim 1 or 2, wherein the step of controlling camera settings comprises automatically controlling camera settings based on image data captured by the monitoring camera in the overlapping region.

4. The method of any of the preceding claims, wherein the step of controlling camera settings comprises
accessing data relating to predefined camera settings values related to the camera settings control area, and
controlling camera settings according to the predefined camera settings values.

5. The method of any of the preceding claims, further comprising the step of accessing data defining a selection of camera settings to be controlled for the camera settings control area, and wherein the step of controlling camera settings comprises controlling the defined selection of camera settings.

6. The method of any of the preceding claims, wherein
the step of accessing data defining a camera settings control area comprises accessing data defining the camera settings control area in a coordinate system for the scene, and
the step of determining if there is an overlapping region comprises comparing coordinates of the camera settings control area to coordinates of the current field of view in the coordinate system for the scene.

7. The method of any of the preceding claims, wherein the step of defining a camera settings control area comprises defining a first and a second camera settings control area,
wherein the step of determining an overlapping region comprises determining if there is a first and a second overlapping region corresponding to the first and the second camera settings control area, respectively, and,
wherein, if there is a first and second overlapping region, the step of controlling camera settings comprises selecting one of the first and the second overlapping region based on region properties for the first and the second overlapping region, and controlling camera settings based on the selected overlapping region,
wherein the region properties include at least one of: size of region, amount of detected motion in region, a priority setting for the camera settings control area corresponding to the respective region.

8. A monitoring camera arranged to monitor a scene, comprising
a field of view altering unit arranged to alter a field of view of the camera such that the camera is able to capture images of different parts of a scene,
a data input arranged to receive data defining a camera settings control area within the scene,
an overlap determining unit arranged to determine if there is an overlapping region between a current field of view of the camera and the camera settings control area, and
a camera settings control unit arranged to control camera settings based on the overlapping region.

9. The monitoring camera of claim 8, wherein the field of view altering unit comprises a motor arranged to alter the field of view of the camera in at least one of a pan, tilt or zoom direction.

10. The monitoring camera of claim 8 or 9, wherein the camera settings control unit is arranged to automatically control camera settings based on image data captured by the monitoring camera in the overlapping region.

11. The monitoring camera of any of claims 8-10, wherein the camera settings control unit is arranged to access data relating to predefined camera settings values related to the camera settings control area, and control camera settings according to the predefined values.

12. The monitoring camera of any of claims 8-11, wherein the data defining a camera settings control area and/or data defining a selection of camera settings to be controlled are based on user input.

13. The monitoring camera of any of claims 8-12, wherein
the data input is arranged to receive data defining the camera settings control area in a coordinate system for the scene, and
the overlap determining unit is arranged to compare coordinates of the camera settings control area to coordinates of the current field of view in the coordinate system for the scene.

14. The monitoring camera of any of claims 8-13, wherein the data input is arranged to receive data defining a first and a second camera settings control area,
wherein the overlap determining unit is arranged to determine if there is a first and a second overlapping region corresponding to the first and the second camera settings control area, respectively, and,
wherein, if there is a first and second overlapping region, the camera settings control unit is arranged to select one of the first and the second overlapping region based on region properties for the first and the second overlapping region, and to control camera settings based on the selected overlapping region,
wherein the region properties include at least one of: size of region, amount of detected motion in region, a priority setting for the camera settings control area corresponding to the respective region.

15. A computer-readable recording medium having recorded thereon a program for implementing the method according to any one of claims 1-7 when executed on a device having processing capabilities.

## Patentansprüche

1. Verfahren zum Steuern von Kameraeinstellungen für eine Überwachungskamera, die zum Überwachen einer Szene eingerichtet ist, wobei die Überwachungskamera eingerichtet ist, Bilder von verschiedenen Teilen der Szene aufzunehmen, indem ein Sichtfeld der Kamera verändert wird, mit den Schritten zum:
Zugreifen auf Daten, die ein Steuerungsgebiet von Kameraeinstellungen innerhalb der Szene festlegen,
Bestimmen, ob es einen Überlappungsbereich zwischen einem aktuellen Sichtfeld der Kamera und dem Steuerungsgebiet von Kameraeinstellungen gibt, und
Steuern von Kameraeinstellungen auf Basis des Überlappungsbereichs, wenn ein Überlappungsbereich vorhanden ist.

2. Verfahren nach Anspruch 1, wobei die Kameraeinstellungen mindestens eines enthalten von: Bildschärfeeinstellungen, Belichtungseinstellungen, Weißabgleicheinstellungen, IR-Sperrfilter-Betriebsart, Blendensteuerungseinstellungen und Einstellungen für eine Beleuchtungseinheit.

3. Verfahren nach Anspruch 1 oder 2, wobei der Schritt zum Steuern von Kameraeinstellungen ein automatisches Steuern von Kameraeinstellungen auf Basis von Bilddaten umfasst, die von der Überwachungskamera im Überlappungsbereich aufgenommen wurden.

4. Verfahren nach einem der vorhergehenden Ansprüche, wobei der Schritt zum Steuern von Kameraeinstellungen umfasst:
Zugreifen auf Daten, die vorgegebene Kameraeinstellungswerte betreffen, welche sich auf das Steuerungsgebiet von Kameraeinstellungen beziehen, und
Steuern von Kameraeinstellungen gemäß den vorgegebenen Kameraeinstellungswerten.

5. Verfahren nach einem der vorhergehenden Ansprüche, ferner den Schritt zum Zugreifen auf Daten umfassend, die eine Auswahl von Kameraeinstellungen festlegen, die für das Steuerungsgebiet von Kameraeinstellungen zu steuern sind, und wobei der Schritt zum Steuern von Kameraeinstellungen das Steuern der festgelegten Auswahl von Kameraeinstellungen umfasst.

6. Verfahren nach einem der vorhergehenden Ansprüche, wobei
der Schritt zum Zugreifen auf Daten, die ein Steuerungsgebiet von Kameraeinstellungen festlegen, einen Zugriff auf Daten umfasst, welche das Steuerungsgebiet von Kameraeinstellungen in einem Koordinatensystem für die Szene festlegen, und
der Schritt zum Bestimmen, ob es einen Überlappungsbereich gibt, einen Vergleich von Koordinaten des Steuerungsgebiets von Kameraeinstellungen mit Koordinaten des aktuellen Sichtbereichs in dem Koordinatensystem für die Szene umfasst.

7. Verfahren nach einem der vorhergehenden Ansprüche, wobei der Schritt zum Festlegen des Steuerungsgebiets von Kameraeinstellungen eine Festlegung eines ersten und zweiten Steuerungsgebiets von Kameraeinstellungen umfasst,
wobei der Schritt zum Bestimmen eines Überlappungsbereiches eine Bestimmung umfasst, ob es einen ersten und einen zweiten Überlappungsbereich gibt , der zu dem ersten bzw. dem zweiten Steuerungsgebiet von Kameraeinstellungen gehört, und
wobei dann, wenn ein erster und zweiter Überlappungsbereich vorhanden sind, der Schritt zum Steuern von Kameraeinstellungen ein Auswählen eines von dem ersten und zweiten Überlappungsbereich auf Basis von Bereichseigenschaften des ersten und zweiten Überlappungsbereichs und ein Steuern von Kameraeinstellungen auf Basis des ausgewählten Überlappungsbereichs umfasst und
wobei die Bereichseigenschaften mindestens eines einschließen von: Größe des Bereichs, Umfang der erfassten Bewegung im Bereich, eine Prioritätseinstellung für das Steuerungsgebiet von Kameraeinstellungen entsprechend dem jeweiligen Bereich.

8. Überwachungskamera, die zum Überwachen einer Szene eingerichtet ist, mit:
einer Sichtfeld-Veränderungseinheit, die eingerichtet ist, das Sichtfeld der Kamera derart zu verändern, dass die Kamera in der Lage ist, Bilder von verschiedenen Teilen einer Szene aufzunehmen,
einer Dateneingabe, die eingerichtet ist, Daten zu empfangen, die ein Steuerungsgebiet von Kameraeinstellungen innerhalb der Szene festlegen,
einer Überlappungsbestimmungseinheit, die eingerichtet ist zu bestimmen, ob es einen Überlappungsbereich zwischen einem aktuellen Sichtfeld der Kamera und dem Steuerungsgebiet von Kameraeinstellungen gibt, und
einer Kameraeinstellungen-Steuereinheit, die eingerichtet ist, auf Basis des Überlappungsbereichs Kameraeinstellungen zu steuern.

9. Überwachungskamera nach Anspruch 8, wobei die Sichtfeld-Veränderungseinheit einen Motor aufweist, der eingerichtet ist, das Sichtfeld der Kamera in mindestens einer von der Schwenk-, Neigungs- oder Zoomrichtung zu verändern.

10. Überwachungskamera nach Anspruch 8 oder 9, wobei die Kameraeinstellungen-Steuereinheit eingerichtet ist, Kameraeinstellungen auf Basis von Bilddaten, die von der Überwachungskamera im Überlappungsbereich aufgenommen wurden, automatisch zu steuern.

11. Überwachungskamera nach einem der Ansprüche 8-10, wobei die Kameraeinstellungen-Steuereinheit eingerichtet ist, auf Daten zuzugreifen, die vorgegebene Kameraeinstellungswerte betreffen, welche sich auf das Steuerungsgebiet von Kameraeinstellungen beziehen, und Kameraeinstellungen gemäß den vorgegebenen Werten zu steuern.

12. Überwachungskamera nach einem der Ansprüche 8-11, wobei die Daten, die ein Steuerungsgebiet von Kameraeinstellungen festlegen, und/oder Daten, die eine Auswahl von zu steuernden Kameraeinstellungen festlegen, auf einer Benutzereingabe basieren.

13. Überwachungskamera nach einem der Ansprüche 8-12, wobei
die Dateneingabe eingerichtet ist, Daten zu empfangen, die das Steuerungsgebiet von Kameraeinstellungen für die Szene festlegen, und
die Überlappungsbestimmungseinheit eingerichtet ist, Koordinaten des Steuerungsgebiets von Kameraeinstellungen mit Koordinaten des aktuellen Sichtfeldes in dem Koordinatensystem für die Szene zu vergleichen.

14. Überwachungskamera nach einem der Ansprüche 8-13, wobei die Dateneingabe eingerichtet ist, Daten zu empfangen, die ein erstes und zweites Steuerungsgebiet von Kameraeinstellungen festlegen,
wobei die Überlappungsbestimmungseinheit eingerichtet ist zu bestimmen, ob es einen ersten und einen zweiten Überlappungsbereich gibt, der zu dem ersten bzw. zweiten Steuerungsgebiet von Kameraeinstellungen gehört, und
wobei dann, wenn ein erster und zweiter Überlappungsbereich vorhanden sind, die Kameraeinstellungen-Steuereinheit eingerichtet ist, einen von dem ersten und zweiten Überlappungsbereich auf Basis von Bereichseigenschaften des ersten und zweiten Überlappungsbereichs auszuwählen und Kameraeinstellungen auf Basis des ausgewählten Überlappungsbereichs zu steuern,
wobei die Bereichseigenschaften mindestens eines einschließen von: Größe des Bereichs, Umfang der erfassten Bewegung im Bereich, eine Prioritätseinstellung für das Steuerungsgebiet von Kameraeinstellungen entsprechend dem jeweiligen Bereich.

15. Computerlesbares Aufzeichnungsmedium, das darauf aufgezeichnet ein Programm zum Umsetzen des Verfahrens nach einem der Ansprüche 1-7 aufweist, wenn es auf einer Einrichtung ausgeführt wird, die Verarbeitungsfähigkeiten aufweist.

## Revendications

1. Procédé de commande de paramètres de caméra pour une caméra de surveillance agencée pour surveiller une scène, la caméra de surveillance étant agencée pour prendre des images de différentes parties de la scène en altérant un champ de vision de la caméra, comprenant les étapes de :
l'accès à des données définissant une zone de commande de paramètres de caméra à l'intérieur de la scène,
la détermination s'il existe une région de chevauchement entre un champ de vision actuel de la caméra et la zone de commande de paramètres de caméra, et
s'il existe une région de chevauchement, la commande des paramètres de caméra sur la base de la région de chevauchement.

2. Procédé selon la revendication 1, dans lequel les paramètres de caméra comprennent au moins l'un de : des paramètres de focalisation, des paramètres d'exposition, des paramètres d'équilibre des blancs, un mode de filtre de coupure infrarouge, des paramètres de commande d'iris et des paramètres d'une unité d'éclairage.

3. Procédé selon la revendication 1 ou 2, dans lequel l'étape de la commande de paramètres de caméra comprend la commande automatique de paramètres de caméra sur la base de données d'images acquises par la caméra de surveillance dans la région de chevauchement.

4. Procédé selon l'une quelconque des revendications précédentes, dans lequel l'étape de la commande de paramètres de caméra comprend :
l'accès à des données relatives à des valeurs de paramètres de caméra prédéfinies liées à la zone de commande de paramètres de caméra, et
la commande de paramètres de caméra en fonction des valeurs de paramètres de caméra prédéfinies.

5. Procédé selon l'une quelconque des revendications précédentes, comprenant en outre l'étape de l'accès à des données définissant une sélection de paramètres de caméra à commander pour la zone de commande de paramètres de caméra, et dans lequel l'étape de la commande de paramètres de caméra comprend la commande de la sélection définie de paramètres de caméra.

6. Procédé selon l'une quelconque des revendications précédentes, dans lequel
l'étape de l'accès à des données définissant une zone de commande de paramètres de caméra comprend l'accès à des données définissant la zone de commande de paramètres de caméra dans un système de coordonnées pour la scène, et
l'étape de la détermination s'il existe une région de chevauchement comprend la comparaison de coordonnées de la zone de commande de paramètres de caméra à des coordonnées du champ de vision actuel dans le système de coordonnées pour la scène.

7. Procédé selon l'une quelconque des revendications précédentes, dans lequel l'étape de la définition d'une zone de commande de paramètres de caméra comprend la définition de première et deuxième zones de commande de paramètres de caméra,
dans lequel l'étape de la détermination d'une région de chevauchement comprend la détermination s'il existe des première et deuxième régions de chevauchement correspondant respectivement aux première et deuxième zones de commande de paramètres de caméra, et
dans lequel, s'il existe des première et deuxième régions de chevauchement, l'étape de la commande de paramètres de caméra comprend la sélection de l'une des première et deuxième régions de chevauchement sur la base de propriétés de région pour les première et deuxième régions de chevauchement, et la commande des paramètres de caméra sur la base de la région de chevauchement sélectionnée,
dans lequel les propriétés de région comprennent au moins l'un de : une taille de région, une quantité de mouvement détecté dans une région, un paramètre de priorité pour la zone de commande de paramètres de caméra correspondant à la région respective.

8. Caméra de surveillance agencée pour surveiller une scène, comprenant :
une unité d'altération de champ de vision agencée pour altérer un champ de vision de la caméra de sorte que la caméra soit apte à prendre des images de différentes parties d'une scène,
une entrée de données agencée pour recevoir des données définissant une zone de commande de paramètres de caméra à l'intérieur de la scène,
une unité de détermination de chevauchement agencée pour déterminer s'il existe une région de chevauchement entre un champ de vision actuel de la caméra et la zone de commande de paramètres de caméra, et
une unité de commande de paramètres de caméra agencée pour commander des paramètres de caméra sur la base de la région de chevauchement.

9. Caméra de surveillance selon la revendication 8, dans laquelle l'unité d'altération de champ de vision comprend un moteur agencé pour altérer le champ de vision de la caméra dans au moins l'un d'un sens de panoramique, d'inclinaison ou de zoom.

10. Caméra de surveillance selon la revendication 8 ou 9, dans laquelle l'unité de commande de paramètres de caméra est agencée pour commander automatiquement des paramètres de caméra sur la base de données d'images acquises par la caméra de surveillance dans la région de chevauchement.

11. Caméra de surveillance selon l'une quelconque des revendications 8 à 10, dans laquelle l'unité de commande de paramètres de caméra est agencée pour accéder à des données relatives à des valeurs de paramètres de caméra prédéfinies liées à la zone de commande de paramètres de caméra, et pour commander des paramètres de caméra en fonction des valeurs prédéfinies.

12. Caméra de surveillance selon l'une quelconque des revendications 8 à 11, dans laquelle les données définissant une zone de commande de paramètres de caméra et/ou les données définissant une sélection de paramètres de caméra à commander sont basées sur une entrée d'utilisateur.

13. Caméra de surveillance selon l'une quelconque des revendications 8 à 12, dans laquelle
l'entrée de données est agencée pour recevoir des données définissant la zone de commande de paramètres de caméra dans un système de coordonnées pour la scène, et
l'unité de détermination de chevauchement est agencée pour comparer des coordonnées de la zone de commande de paramètres de caméra à des coordonnées du champ de vision actuel dans le système de coordonnées pour la scène.

14. Caméra de surveillance selon l'une quelconque des revendications 8 à 13, dans laquelle l'entrée de données est agencée pour recevoir des données définissant des première et deuxième zones de commande de paramètres de caméra,
dans laquelle l'unité de détermination de chevauchement est agencée pour déterminer s'il existe des première et deuxième régions de chevauchement correspondant respectivement aux première et deuxième zones de commande de paramètres de caméra, et
dans laquelle, s'il existe des première et deuxième régions de chevauchement, l'unité de commande de paramètres de caméra est agencée pour sélectionner l'une des première et deuxième régions de chevauchement sur la base de propriétés de région pour les première et deuxième régions de chevauchement, et pour commander des paramètres de caméra sur la base de la région de chevauchement sélectionnée,
dans laquelle les propriétés de région comprennent au moins l'une de : une taille de région, une quantité de mouvement détecté dans une région, un paramètre de priorité pour la zone de commande de paramètres de caméra correspondant à la région respective.

15. Support d'enregistrement lisible par ordinateur sur lequel est enregistré un programme pour mettre en oeuvre le procédé selon l'une quelconque des revendications 1 à 7 lorsqu'il est exécuté sur un dispositif ayant des capacités de traitement.
